# EUROPÄISCHE PATENTSCHRIFT

(11) **EP 2 814 329 B1**
(45) Veröffentlichungstag und Bekanntmachung des Hinweises auf die Patenterteilung: **15.04.2020**
(21) Anmeldenummer: 13703810.5
(22) Anmeldetag: 12.02.2013
(51) Int. Cl.: A23L 27/30, A23L 29/30, A23G 3/32, A23G 3/38, A23G 3/42, A23G 3/36

(54) **PH-EINGESTELLTES SÜSSUNGSMITTEL**
PH-ADJUSTED SWEETENER
EDULCORANT À VALEUR DE PH AJUSTÉE

(30) Priorität: 14.02.2012 DE 102012202193
(43) Veröffentlichungstag der Anmeldung: 24.12.2014
(73) Patentinhaber: Evonik Operations GmbH, 45128 Essen (DE); Pfeifer & Langen GmbH & Co. KG, 50858 Köln (DE)
(72) Erfinder: HÜLLER, Thomas, 45772 Marl (DE); HABERLAND, Jürgen, 45721 Haltern am See (DE); ZEHNACKER, Olivier, 44263 Dortmund (DE); LUDOVICI, Karl, 51465 Bergisch Gladbach (DE); OSWALD, Gerda, 50374 Erfstadt (DE); BONGERS, Ulrich, 50169 Kerpen (DE)
(74) Vertreter: Evonik Patent Association
(86) Internationale Anmeldenummer: PCT/EP2013/052759
(87) Internationale Veröffentlichungsnummer: WO 2013/120838

(56) Entgegenhaltungen:
- WO-A1-2006/119991
- WO-A1-2010/031527
- WO-A2-2004/049815
- DE-A1- 19 606 968
- DE-A1-102004 038 689

## Beschreibung

### Gebiet der Erfindung

Gegenstand der Erfindung sind Verfahren zur Herstellung von Hartkaramellen aus Isomalt unter Einhalt strikter pH-Werte sowie Mischungszusammensetzungen enthaltend Isomalt und gegebenenfalls pH-Puffersubstanzen mit definiertem pH-Wert.

### Stand der Technik

Isomalt gehört zu der Gruppe der Disaccharidalkohole und findet Verwendung als Zuckeraustauschstoff. Die herkömmliche Herstellung erfolgt in zwei Verfahrensschritten: Enzymatische Isomerisierung von Saccharose zu Isomaltulose und Hydrierung der Isomaltulose zu Isomalt. Das Produkt Isomalt stellt ein Isomerengemisch von 1-O-α-D-glucopyranosyl-D-mannit (1,1-GPM) und 6-O-α-D-glucopyranosyl-D-sorbit (1,6-GPS) dar. (Siehe auch: J. Kowalczyk., Isomalt, S. 340-359 in K. Rosenplenter, U. Nöhle (Hrsg.), Handbuch der Süßungsmittel, 2007, B. Behr's Verlag GmbH & Co. KG)
Klassische Hartkaramellen sind im Wesentlichen aus Saccharose und Glukose bestehende Zuckerwaren, die unter Verwendung von geruch- und geschmacksgebenden, färbenden und die Beschaffenheit beeinflussenden Substanzen hergestellt werden. Hartkaramellen besitzen eine harte, glasartige Konsistenz.

Isomalt kann aufgrund seines niedrigen kalorischen Gehaltes, der guten Hitzestabilität, sowie der inerten Eigenschaften von Isomalt im Zusammenhang mit anderen bei der Hartkaramellenherstellung verwendeten Ingredienzien als direkter Ersatz von Saccharose für "zuckerfreie" Hartkaramellen verwendet werden (H. Schiweck, et al. (2005) Sugar Alcohols, in Ullmann's Encyclopedia of Industrial Chemistry, Wiley-VCH).

Hartkaramellen werden heute meist mit Verfahren hergestellt, bei denen der Zucker beziehungsweise der Zuckeraustauschstoff als Granulat mit Wasser zuerst in Lösung gebracht wird. Anschließend wird die Masse in einem vakuumierten Kochprozess auf einen Wassergehalt von 2 % reduziert und abgekühlt, so dass die Masse mit entsprechenden Zusätzen (Aromen, Säuren, Farben) versetzt werden kann. Die Hartkaramellenmasse wird anschließend in die gewünschte Form geprägt oder gegossen.

Ein alternatives Verfahren stellt das Spritzgießverfahren dar, bei dem das Zuckerbeziehungsweise Zuckeraustauschstoffgranulat direkt ohne den Umweg über die wässrige Lösung verarbeitet wird. Der Rohstoff wird in einer Spritzgießmaschine in einer beizbaren Kavität plastifiziert und thermisch sowie stofflich homogenisiert. Nach Abkühlen auf Entformungstemperatur kann das Formteil entnommen werden.

Mit dem wachsendem Ernährungsbewusstsein des Konsumenten steigt der Bedarf an zuckerfreien bzw. kalorienreduzierten Süßwaren ständig. Daher wurden in den letzten Jahren verstärkt Hartkaramellen basierend auf Isomalt angeboten.

Verfahren zur Herstellung von Hartkaramellen basierend auf Isomalt sind im Stand der Technik beschrieben:
Die EP1217898 offenbart Hartkaramelle, enthaltend 1,1-GPM (1-O- alpha -D-Glucopyranosyl-D-mannit) in einer Menge von 52 bis 60 Gew.-% (bezogen auf Gesamttrockensubstanz der Hartkaramelle) und Sorbit in einer Menge von 0,5 bis 3,5 Gew.-% sowie ein Verfahren zur Herstellung einer Hartkaramelle, wobei eine wässrige Lösung oder Suspension eines Gemisches, enthaltend 52 bis 60 Gew.-% 1,1-GPM und 0,5 bis 3,5 Gew.-% Sorbit unter Hitzeeinwirkung evaporiert, abgekühlt, geformt und eine Hartkaramelle erhalten wird.

Die WO01/03513 beschreibt ein Verfahren zur Herstellung einer zuckerfreien, nicht-kariogenen, harten Süßware, welches die folgenden Schritte umfasst:
a) Herstellung eines Sirups (1) mit einer Trockensubstanz von 60 bis 80%, bestehend aus einer Mischung aus hydriertem Stärkehydrolysatsirup (2) und Isomaltpulver oder Isomaltsirup (3), dadurch gekennzeichnet, daß die Trockensubstanz des Sirups (1) aus 14 bis 25% w/w hydriertem Stärkehydrolysatsirup (2) (Trockensubstanz) besteht, wobei die Trockensubstanz des hydrierten Stärkehydrolysatsirups (2) zwischen 22 und 55% w/w höhere Polyole umfasst, und die Trockensubstanz des Sirups (1) aus 75 bis 86% w/w Isomalt besteht, und die Trockensubstanz des Sirups (1) aus 7 bis 52% w/w 6-O-α-D-Glukopyranosyl-D-sorbit (1,6 GPS), 24,5 bis 52% w/w 1-O-α-D-Glukopyranosyl-D-mannit (1,1 GPM), 0 bis 52% w/w 1-O-α-Glukopyranosyl-D-sorbit (1,1 GPS), 0 bis 1,3% w/w Sorbit (DP1), 2,8 bis 13,8% w/w Maltit (DP2), 1,5 bis 4,2% w/w Maltotriitol (DP3), 3,0 bis 13,5% w/w höhere Polyole (DPn) besteht,
b) Kochen bei einer Temperatur zwischen 145 und 170°C und geringem Vakuum, und
c) Formen durch Stempel- oder Ablagerungsmethode.

WO 2010/031527 A1 offenbart gefüllte Hartkaramellen, wobei die Umhüllung durch Mischen von Isomalt, Sucralose und Wasser hergestellt wird. Die erhaltenen, festen Hartkaramellen bestehen zu 15 Gew.-% aus der Fruktane enthaltenden Mischung und zu 85 Gew-% aus der formbaren Masse. Die vorgebliche finale Zusammensetzung der Hartkaramellen weisen einen pH-Wert von 4,9 auf, wobei keine Messmethode oder Messtemperatur für die pH-Wertbestimmung angegeben ist. Es wird außerdem darauf hingewiesen, dass die in den Zusammensetzungen immer enthaltenen Fruktane nicht sauer hydrolisiert werden, sondern man bevorzugt bei möglichst hohem pH-Wert arbeiten sollte.

Das Dokument WO 2004/049815 A2 offenbart die Verwendung von oberflächenaktiven Mitteln, insbesondere Emulgatoren, und/oder Genusssäuren, zur Verbesserung der Oberflächenbeschaffenheit von Hartkaramellen, wobei entweder unterhalb des pH-Bereichs von pH 4,0 oder oberhalb pH 5,0 gearbeitet wird.

In der Praxis hat sich gezeigt, dass herkömmliches Isomalt aus bisher nicht geklärten Gründen in den Standardverfahren zum trüben Einfrieren und somit zur Ausbildung opaker Hartkaramellen neigt. Des Weiteren ist in manchen Chargen eine erhöhte Hygroskopizität der Hartkaramellen zu verzeichnen, welche nach kurzer Lagerzeit zu klebrigen Hartkaramellen führt. Diese negativen Produkteigenschaften werden im großtechnischen Herstellprozess ansatzweise dadurch reduziert, dass in dem Prozess für Isomalt-Hartkaramellen nur vollentsalztes Wasser eingesetzt wird. Der Einsatz dieses vorbehandelten Wassers stellt im Vergleich zu herkömmlichen Verfahren mit Zucker unnötigen Aufwand dar, da dort mit dem gerade verfügbaren Leitungswasser gearbeitet wird.

Weil Transparenz, Farblosigkeit und Klebrigkeit einer Hartkaramelle ein eindeutiges und ins Auge fallendes Merkmal der Produktqualität darstellen, ist es wünschenswert, ein Verfahren bereitzustellen, welches ausschließlich hochwertige Hartkaramellen basierend auf Isomalt liefert.

Aufgabe der Erfindung war es daher, ein Verfahren bereitzustellen, welches verlässlich und störunanfällig ausschließlich hochwertige, auf Isomalt basierende Hartkaramellen liefert.

### Beschreibung der Erfindung

Überraschenderweise wurde gefunden, dass die im Folgenden beschriebenen Verfahren zur Herstellung von auf Isomalt basierenden Hartkaramellen, bei dem das Isomalt in einer Umgebung mit einem bestimmten pH-Bereich vorliegt, und Mischungszusammensetzungen enthaltend Isomalt und pH-Puffersubstanzen die der Erfindung gestellt Aufgabe zu lösen vermögen.

Gegenstand der vorliegenden Erfindung sind daher wässrige Isomalt-Lösungen mit einem bestimmten pH-Wert, Mischungszusammensetzungen enthaltend Isomalt und bestimmte pH-Puffersubstanzen.

Ein weiterer Gegenstand der Erfindung ist ein Verfahren zur Herstellung von auf Isomalt basierenden Hartkaramellen, bei dem die wässrige Isomaltlösung einen bestimmten pH-Bereich aufweist.

Noch ein Gegenstand der Erfindung ist ein Verfahren zur Herstellung von auf Isomalt basierenden Hartkaramellen, bei dem feste Mischungszusammensetzungen enthaltend Isomalt und bestimmte pH-Puffersubstanzen aufgeschmolzen und plastifiziert werden.

Ein Vorteil der vorliegenden Erfindung ist es, dass durch die gesteuerte pH-Wert-Führung im Laufe des Verfahrens auf Isomalt basierende Hartkaramellen mit einer niedrigen Hygroskopizität und ohne erhöhte Farbwerte reproduzierbar herstellen lassen.

Noch ein Vorteil der vorliegenden Erfindung ist es, dass sich klare Hartkaramellen reproduzierbar darstellen lassen.

Noch ein Vorteil der vorliegenden Erfindung ist es, dass sich Hartkaramellen darstellen lassen, welche eine geringe und damit gute Rekristallisationsneigung aufweisen.

Ein Vorteil der erfindungsgemäßen Mischungszusammensetzung ist ihre homogene Aufschmelzbarkeit.

Ein weiterer Vorteil der erfindungsgemäßen Mischungszusammensetzung ist ihr Vermögen, Farbstoffe stabil in der Hartkaramelle zu konservieren.

Noch ein Vorteil ist es, dass die erfindungsgemäße Mischungszusammensetzung eine gute Fließfähigkeit aufweist.

Ein weiterer Vorteil der erfindungsgemäßen Mischungszusammensetzung ist ihre gute Komprimierbarkeit.

Noch ein Vorteil der erfindungsgemäßen festen Mischungszusammensetzung ist ihr gutes Entformungsverhalten.

Der "pH-Wert" im Zusammenhang mit der vorliegenden Erfindung ist definiert als der Wert, welcher für entsprechende Verbindungen gelöst in demineralisiertem Wasser bei 25 °C nach fünf Minuten Rühren gemessen wird mit einer kalibrierten pH-Elektrode gemäß ISO 4319 (1977).

Unter dem Begriff "wässrige Lösung" im Zusammenhang mit der vorliegenden Erfindung ist mindestens eine mindestens teilweise in Wasser gelöste, entsprechende Substanz zu verstehen, wobei die Lösung bevorzugt mindestens 5 Gew.-% Wasser, bezogen auf die betrachte Gesamtzusammensetzung, enthält.

Die "Puffer-Kapazität" im Zusammenhang mit der vorliegenden Erfindung ist definiert, als dass ein Wert von "1" einer Pufferlösung, deren pH-Wert sich bei Zugabe von 1 mol Base pro Liter Pufferlösung um eine pH-Einheit ändert, entspricht, unter Bedingungen wie oben für die pH-Messung beschrieben.

Gegenstand der vorliegenden Erfindung ist somit
eine wässrige Lösung enthaltend
20 Gew.-% bis 75 Gew.-%, bevorzugt 40 Gew.-% bis 65 Gew.-%, besonders bevorzugt 45 Gew.-% bis 60 Gew.-% 6-O-α-D-Glucopyranosyl-D-Sorbitol,
25 Gew.-% bis 80 Gew.-%, bevorzugt 35 Gew.-% bis 60 Gew.-%, besonders bevorzugt 40 Gew.-% bis 55 Gew.-% 1-O-α-D-Glucopyranosyl-D-Mannitol,
wobei sich die Gew.-% auf die Gesamtmenge der Zucker und Zuckeralkohole der gesamten Lösung beziehen, dadurch gekennzeichnet, dass die Lösung bei einer Temperatur von 25 °C einen pH-Wert von 4,0 bis 4,5, bevorzugt 4,1 bis 4,5, besonders bevorzugt 4,2 bis 4,3, aufweist.

Da es verschiedene Qualitäten von Isomalt gibt, welche je nach Herstellungsverfahren weitere Produkte enthalten können, werden außerdem wässrige Lösungen beansprucht, zusätzlich enthaltend,
0,02 Gew.-% bis 15 Gew.-%, bevorzugt 0,1 Gew.-% bis 10 Gew.-%, besonders bevorzugt 0,2 Gew.-% bis 5 Gew.-% 1-O-α-D-Glucopyranosyl-D-Sorbitol,
0,02 Gew.-% bis 15 Gew.-%, bevorzugt 0,1 Gew.-% bis 8 Gew.-%, besonders bevorzugt 0,2 Gew.-% bis 3,5 Gew.-% Sorbitol und
0,02 Gew.-% bis 15 Gew.-%, bevorzugt 0,1 Gew.-% bis 10 Gew.-%, besonders bevorzugt 0,2 Gew.-% bis 2,9 Gew.-% Mannitol,
wobei sich die Gew.-% auf die Gesamtmenge der Zucker und Zuckeralkohole der gesamten Lösung beziehen.

Erfindungsgemäß bevorzugte Lösungen weisen eine Gesamtmenge von Zuckern und Zuckeralkoholen von 40 Gew.-% bis 90 Gew.-%, bevorzugt 70 Gew.-% bis 80 Gew.-%, bezogen auf die gesamte wässrige Lösung auf.

Dem Fachmann ist bekannt, wie man den pH-Wert einer wässrigen Lösung beeinflussen kann; so kann dieser durch Zufügen von Basen oder Säuren angehoben oder gesenkt werden. Insbesondere wässrige Lösungen von Alkali-Hydroxiden wie beispielsweise NaOH (aq) sind als Basen geeignet; als Säuren bieten sich beispielsweise mineralische Säuren wie zum Beispiel HCl oder organische Säuren wie beispielsweise Essigsäure an.

Beansprucht wird außerdem eine Mischungszusammensetzung enthaltend, bevorzugt bestehend aus,
20 Gew.-% bis 75 Gew.-%, bevorzugt 40 Gew.-% bis 65 Gew.-%, besonders bevorzugt 45 Gew.-% bis 60 Gew.-% 6-O-α-D-Glucopyranosyl-D-Sorbitol,
25 Gew.-% bis 80 Gew.-%, bevorzugt 35 Gew.-% bis 60 Gew.-%, besonders bevorzugt 40 Gew.-% bis 55 Gew.-% 1-O-α-D-Glucopyranosyl-D-Mannitol, und
0,02 Gew.-% bis 15 Gew.-%, bevorzugt 0,5 Gew.-% bis 5 Gew.-%, besonders bevorzugt 0,5 Gew.-% bis 2 Gew.-% pH-Puffersubstanz,
wobei sich die Gew.-% auf die Gesamtmenge der Zucker und Zuckeralkohole der gesamten Mischungszusammensetzung beziehen, dadurch gekennzeichnet,
dass sie in Form einer 40 Gew.-% Trockensubstanz enthaltenden wässrigen Lösung, wobei sich die Gew.-% auf die gesamte wässrige Lösung beziehen, bei einer Temperatur von 25 °C einen pH-Wert von 4,0 bis 4,5, bevorzugt 4,1 bis 4,5, besonders bevorzugt 4,2 bis 4,3, aufweist.

Unter dem Begriff "pH-Puffersubstanz" sind eine oder mehrere chemische Verbindungen zu verstehen, die in der Lage sind, aufgrund einer Abfangreaktion von Wasserstoff- bzw. Hydroxid-Ionen unter Bildung schwacher Säuren bzw. Basen begründet im Dissoziationsgleichgewicht, den pH-Wert einer wässrigen Lösung konstant zu halten.
Alle angegebenen Prozent (%) sind, wenn nicht anders angegeben, Massenprozent.

Da es verschiedene Qualitäten von Isomalt gibt, welche je nach Herstellungsverfahren weitere Produkte enthalten können, werden außerdem Mischungszusammensetzungen beansprucht, zusätzlich enthaltend
0,02 Gew.-% bis 15 Gew.-%, bevorzugt 0,1 Gew.-% bis 10 Gew.-%, besonders bevorzugt 0,2 Gew.-% bis 5 Gew.-% 1-O-α-D-Glucopyranosyl-D-Sorbitol,
0,02 Gew.-% bis 15 Gew.-%, bevorzugt 0,1 Gew.-% bis 8 Gew.-%, besonders bevorzugt 0,2 Gew.-% bis 3,5 Gew.-% Sorbitol und
0,02 Gew.-% bis 15 Gew.-%, bevorzugt 0,1 Gew.-% bis 10 Gew.-%, besonders bevorzugt 0,2 Gew.-% bis 2,9 Gew.-% Mannitol,
wobei sich die Gew.-% auf die Gesamtmenge der Zucker und Zuckeralkohole der gesamten Mischungszusammensetzung beziehen.

Diese zusätzlichen Komponenten können vorteilhaft die Eigenschaften der Hartkaramellen bezüglich ihrer Glassübergangstemperatur und Komprimabilität beeinflussen.

Insbesondere weisen erfindungsgemäß bevorzugte Mischungszusammensetzungen bei einer Temperatur von 25 °C in Form einer 40 Gew.-% Trockensubstanz enthaltenden wässrigen Lösung, wobei sich die Gew.-% auf die gesamte wässrige Lösung beziehen, bei einer Temperatur von 25 °C und bei einem pH-Wert von 4,2 eine Pufferkapazität von mindestens 0,01 mmol/l, insbesondere von mindestens 0,05 mmol/l, besonders bevorzugt von mindestens 0,1 mmol/l, auf.

Erfindungsgemäß bevorzugte Mischungszusammensetzungen sind dadurch gekennzeichnet, dass sie eine pH-Puffersubstanz enthalten, welches bei einer Temperatur von 25 °C ein Puffermaximum in einem Bereich von pH 4,0 bis 4,5 aufweist.
Erfindungsgemäß besonders bevorzugt enthaltene pH-Puffersubstanzen sind ausgewählt aus der Gruppe umfassend, bevorzugt bestehend aus:
Citrat-Puffer, Acetat-Puffer, Citrat-Phosphat-Puffer.
Eine erfindungsgemäß besonders bevorzugte Mischungszusammensetzung enthält als pH-Puffersubstanz Acetat-Puffer, wobei dieser 0,12-Gew.% Eisessig und 0,08-Gew.% Natrium-Acetat Trihydrat enthält, wobei sich die Gew.-% auf die Trockensubstanz der gesamten Mischungszusammensetzung beziehen.
Eine erfindungsgemäß besonders bevorzugte Mischungszusammensetzung enthält als pH-Puffersubstanz Citrat-Puffer, wobei dieser 0,30-Gew.% Zitronensäure und 0,31-Gew.% Natrium-Citrat enthält, wobei sich die Gew.-% auf die Trockensubstanz der gesamten Mischungszusammensetzung beziehen.

In einer bevorzugten Ausführungsform sind die erfindungsgemäßen Mischungszusammensetzungen dadurch gekennzeichnet, dass sie bei 25 °C fest, bevorzugt kristallin, sind.
Diese lassen sich vorteilhaft im Spritzgussverfahren einsetzen.
Bevorzugt weisen diese Mischungszusammensetzungen eine zylindrische oder linsenförmige Granulatform auf.
Erfindungsgemäß bevorzugte feste Mischungszusammensetzungen sind dadurch gekennzeichnet, dass sie einen Wassergehalt von kleiner 2 Gew.-%, bevorzugt kleiner 1,5 Gew.-%, insbesondere kleiner 0,5 Gew.-%, bezogen auf die gesamte
Mischungszusammensetzung aufweisen.

In einer bevorzugten alternativen Ausführungsform liegen die erfindungsgemäßen Mischungszusammensetzungen in Form von wässrigen Lösungen vor, welche sich vorteilhaft zur Herstellung von Hartkaramellen in klassischen Verfahren einsetzen lassen.
Dieser Gegenstand der vorliegenden Erfindung wird abgebildet durch eine wässrige Lösung enthaltend 40 Gew.-% bis 90 Gew.-%, bevorzugt 70 Gew.-% bis 80 Gew.-%, einer erfindungsgemäßen Mischungszusammensetzung, wobei die Gew.-% die Menge Trockensubstanz bezogen auf die gesamte wässrige Lösung angeben.
Bevorzugte erfindungsgemäße wässrige Lösung weisen bei einer Temperatur von 25 °C einen pH-Wert von 4,0 bis 5,0, bevorzugt 4,1 bis 4,5, besonders bevorzugt 4,2 bis 4,3, auf.

Ein weiterer Gegenstand der vorliegenden Erfindung ist die Verwendung der erfindungsgemäßen wässrigen Lösungen oder Mischungszusammensetzungen zur Herstellung von Hartkaramellen.

Ein weiterer Gegenstand der vorliegenden Erfindung ist ein erstes Verfahren zur Herstellung einer Hartkaramelle umfassend die Verfahrensschritte
A) Bereitstellen einer erfindungsgemäßen Mischungszusammensetzung in Form einer 40 Gew.-% bis 90 Gew.-%, bevorzugt 70 Gew.-% bis 80 Gew.-%, wässrigen Lösung, wobei die Gew.-% die Menge Trockensubstanz bezogen auf die gesamte wässrige Lösung angeben,
B) Erhitzen der wässrigen Mischungszusammensetzung und Reduzieren des Wassergehaltes auf kleiner 2 Gew.-%, bevorzugt kleiner 1,5 Gew.-%, insbesondere kleiner 0,5 Gew.-%, bezogen auf die gesamte Mischungszusammensetzung,
C) Abkühlen der Mischungszusammensetzung auf eine Temperatur von 100 °C bis 130 °C, insbesondere 110 °C bis 120 °C und gegebenenfalls Hinzufügen weiterer Zusätze wie beispielsweise Aromen, Farben und Säuren, und gegebenenfalls Homogenisieren und
D) Formen und weiteres Abkühlen der Mischungszusammensetzung zu der gewünschten Hartkaramelle.

Es ist vorteilhaft, alle Bestandteile der Mischungszusammensetzung in Verfahrensschritt A) vollständig aufzulösen, um unkontrollierter Rekristallisation während des Produktionsprozesses vorzubeugen. Dies kann bevorzugt durch höhere Temperatur während des Auflösevorgangs erreicht werden, so dass hier die wässrige Lösung in Verfahrensschritt A) erhitzt wird, bevorzugt auf von 70 °C bis 100 °C, insbesondere 80 °C bis 90 °C.

Verfahrensschritt B) kann auf allen gängigen Typen von Satzkochern, semikontinuierlichen und kontinuierlichen Kochanlagen durchgeführt werden. Zur idealen Einstellung des Kochvorgangs und anschließender Messung des Wassergehalts muss beachtet werden, dass die Kochkurven anlagenspezifisch und damit nur bedingt übertragbar sind. Um eine gute Lagerstabilität zu erzielen, sollte die Schmelze bevorzugt auf einen Wassergehalt von weniger als 5, insbesondere weniger 2 Prozent eingekocht werden. Dazu werden in der Regel Temperaturen zwischen 135 °C bis 185 °C, bevorzugt von 145 °C bis 175 °C, insbesondere 155 °C bis 165 °C eingesetzt.
Es ist erfindungsgemäß bevorzugt, wenn Verfahrensschritt B) unter Vakuum, insbesondere bei 0,05 bar bis 0,2 bar, durchgeführt wird.
Im Fall von kontinuierlichen Kocheranlagen, beispielsweise Schlangenkochern,
sollten die Austragvorrichtungen wie Walzen oder Schnecken nicht allzu stark beheizt werden. Eine niedrigere Temperatur erhöht die Adhäsion der Masse und stellt so einen konstanten Austrag sicher.
Die Einarbeitung weiterer Zutaten in Verfahrensschritt C) wie Aromastoffe, Süßstoffe, Säure oder auch Mineralstoffe kann im kontinuierlichen Prozess über eine Mischvorrichtung erfolgen. Da manche Aromastoffe temperaturempfindlich sind und sich bei höheren Temperaturen rasch verflüchtigen, muss die Masse in der semikontinuierlichen oder chargenweisen Produktion vorher gekühlt werden.

Ein weiterer Gegenstand der vorliegenden Erfindung ist ein zweites Verfahren zur Herstellung einer Hartkaramelle umfassend die Verfahrensschritte
A) Bereitstellen einer wässrigen Lösung enthaltend
   20 Gew.-% bis 75 Gew.-% 6-O-α-D-Glucopyranosyl-D-Sorbitol,
   25 Gew.-% bis 80 Gew 1-O-α-D-Glucopyranosyl-D-Mannitol Gew.-%, gegebenenfalls
   0,02 Gew.-% bis 15 Gew.-% α-D-Glucopyranosyl-1,1-D-Sorbitol, gegebenenfalls
   0,02 Gew.-% bis 15 Gew.-% Sorbitol und gegebenenfalls
   0,02 Gew.-% bis 15 Gew.-% Mannitol,
   wobei sich die Gew.-% auf die Gesamtmenge der Zucker und Zuckeralkohole der wässrigen Lösung beziehen,
   in Form einer 40 Gew.-% bis 90 Gew.-%, bevorzugt 70 Gew.-% bis 80 Gew.-%, wässrigen
   Lösung, wobei die Gew.-% die Menge Trockensubstanz bezogen auf die gesamte wässrige Lösung angeben,
   A1) Einstellen des pH-Wertes, dass die wässrige Lösung bei einer Temperatur von 25 °C einen pH-Wert von 4,0 bis 4,5, bevorzugt 4,1 bis 4,5, besonders bevorzugt 4,2 bis 4,3, aufweist,
B) Erhitzen der wässrigen Lösung und Reduzieren des Wassergehaltes auf kleiner 2 Gew.-%, bevorzugt kleiner 1,5 Gew.-%, insbesondere kleiner 0,5 Gew.-%, bezogen auf die gesamte wässrige Lösung,
C) Abkühlen auf eine Temperatur von 100 °C bis 130 °C, insbesondere 110 °C bis 120 °C und gegebenenfalls Hinzufügen weiterer Zusätze wie beispielsweise Aromen, Farben und Säuren, und gegebenenfalls Homogenisieren und
D) Formen und weiteres Abkühlen zu der gewünschten Hartkaramelle.

Die in dem zweiten erfindungsgemäßen Verfahren eingesetzten wässrigen Lösungen enthalten bevorzugt, bevorzugt bestehen aus
20 Gew.-% bis 75 Gew.-%, bevorzugt 40 Gew.-% bis 65 Gew.-%, besonders bevorzugt 45 Gew.-% bis 60 Gew.-% 6-O-α-D-Glucopyranosyl-D-Sorbitol,
25 Gew.-% bis 80 Gew.-%, bevorzugt 35 Gew.-% bis 60 Gew.-%, besonders bevorzugt 40 Gew.-% bis 55 Gew.-% 1-O-α-D-Glucopyranosyl-D-Mannitol, gegebenenfalls
0,02 Gew.-% bis 15 Gew.-%, bevorzugt 0,1 Gew.-% bis 10 Gew.-%, besonders bevorzugt 0,2 Gew.-% bis 5 Gew.-% 1-O-α-D-Glucopyranosyl-D-Sorbitol, gegebenenfalls
0,02 Gew.-% bis 15 Gew.-%, bevorzugt 0,1 Gew.-% bis 8 Gew.-%, besonders bevorzugt 0,2 Gew.-% bis 3,5 Gew.-% Sorbitol und gegebenenfalls
0,02 Gew.-% bis 15 Gew.-%, bevorzugt 0,1 Gew.-% bis 10 Gew.-%, besonders bevorzugt 0,2 Gew.-% bis 2,9 Gew.-% Mannitol,
wobei sich die Gew.-% auf die Gesamtmenge der Zucker und Zuckeralkohole der wässrigen Lösung beziehen.

Dieses zweite erfindungsgemäße Verfahren entspricht dem ersten, erfindungsgemäßen Verfahren, nur wird in diesem zweiten der pH-Wert nicht im Vorfeld durch den Einsatz der Mischungszusammensetzung bestimmt, sondern online im laufenden Verfahren über eine Titration in Verfahrensschritt A1) kontrolliert.
Bevorzugte Ausführungen des zweiten erfindungsgemäßen Verfahrens entsprechen denen des ersten erfindungsgemäßen Verfahrens.

Ein weiterer Gegenstand der vorliegenden Erfindung ist ein drittes Verfahren zur Herstellung einer Hartkaramelle umfassend die Verfahrensschritte
A) Bereitstellen einer festen erfindungsgemäßen Mischungszusammensetzung,
B) Aufschmelzen der Mischungszusammensetzung,
C) Abkühlen der Mischungszusammensetzung auf eine Temperatur von 120 °C bis 150 °C, insbesondere 130 °C bis 140 °C, und gegebenenfalls Hinzufügen weiterer Zusätze wie beispielsweise Aromen, Farben und Säuren, und gegebenenfalls Homogenisieren und
D) Formen und weiteres Abkühlen der Mischungszusammensetzung zu der gewünschten Hartkaramelle.

Dieses dritte erfindungsgemäße Verfahren entspricht einem Spritzgießverfahren des ersten erfindungsgemäßen Verfahrens, bei dem die feste erfindungsgemäße Mischungszusammensetzung eingesetzt wird.
Dieses Verfahren profitiert ebenfalls von den vorteilhaften Eigenschaften der pH-Pufferung des Isomaltes.
Bevorzugt in dem dritten erfindungsgemäßen Verfahren eingesetzte, feste, erfindungsgemäße Mischungszusammensetzungen entsprechen den bevorzugten festen Mischungszusammensetzungen der vorliegenden Erfindung.

Ein weiterer Gegenstand der vorliegenden Erfindung ist eine Hartkaramelle enthaltend eine erfindungsgemäße Mischungszusammensetzung.
Ebenso werden Hartkaramellen beansprucht, welche nach einem der erfindungsgemäßen Verfahren erhältlich sind.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.
Folgende Abbildungen sind Bestandteil der Beispiele:
Abbildung 1: Darstellung der Wasseraufnahme der Bonbonkörper in Gew.-% in Abhängigkeit vom pH-Wert der Ausgangslösung Isomalt
Abbildung 2: Darstellung der ICUMSA-Farbzahl IE420 der Bonbonkörper in Abhängigkeit vom pH-Wert der Ausgangslösung Isomalt

### Beispiele

### Beispiel 1 (nicht erfindungsgemäß): pH-Wert und Puffer-Kapazitätsbestimmung von kommerziellem Isomalt

Es wurden 40 g kommerzielles Isomalt (Isomalt ST, Südzucker AG) unter stetem Rühren aufgelöst in 60 g vollentsalztem Wasser durch Inkubation bei 80 °C für 30 min. Die Lösung wurde abgekühlt auf 25 °C, und der pH-Wert ermittelt unter Verwendung einer pH-Glaselektrode, die zuvor mit Standard-Puffern pH 4,01 und pH 7,00 kalibriert wurde. Ausgehend von dieser Lösung wurde mittels automatisiertem Titrationsverfahren durch Zudosierung von 0,01 N NaOH bis zu einem pH-Wert von 7,0 zu einem definierten Volumen an Isomaltlösung die Pufferkapazität ermittelt anhand der verbrauchten Menge an Lauge an einem definierten Punkt. Folgende Werte wurden hierbei ermittelt:

| | |
|---|---|
| pH-Wert | 3,9 |
| Pufferkapazität pH 5 | 0,1 mmol/l |

### Beispiel 2: Karamellen erfindungsgemäß mit verringerter Wasseraufnahme durch Einstellung des pH- Wertes

Für die Herstellung der Hartkaramelle wurden 40 g kommerzielles Isomalt (Isomaltidex, Cargill) in 60 g vollentsalztem Wasser wie in Beispiel 1 beschrieben aufgelöst.
Durch Zugabe definierter Volumina an 1 N NaOH (aq) wurde der pH-Wert der Lösung schrittweise angehoben bis zu einem pH-Wert von 5,0 oder durch Zugabe von 1 N HCl (aq) schrittweise auf einen definierten Wert abgesenkt bis zu einem pH-Wert von 3,6.
Die erhaltenen Lösungen wurden in einem Becherglas in einem 170 °C - 180 °C heißen Ölbad unter stetem Rühren auf einem Magnetrührer erhitzt. Die Temperatur wurde mittels Stabthermometer in der Isomaltlösung überwacht. Nach vollständigem Abdampfen des Wasseranteils bei 100 °C - 105 °C wurde die Schmelze weiter erhitzt bis zum Erreichen einer Temperatur von 165 °C. Das Becherglas wurde im Anschluss bei Raumtemperatur auf 130 °C - 135 °C abkühlen gelassen.

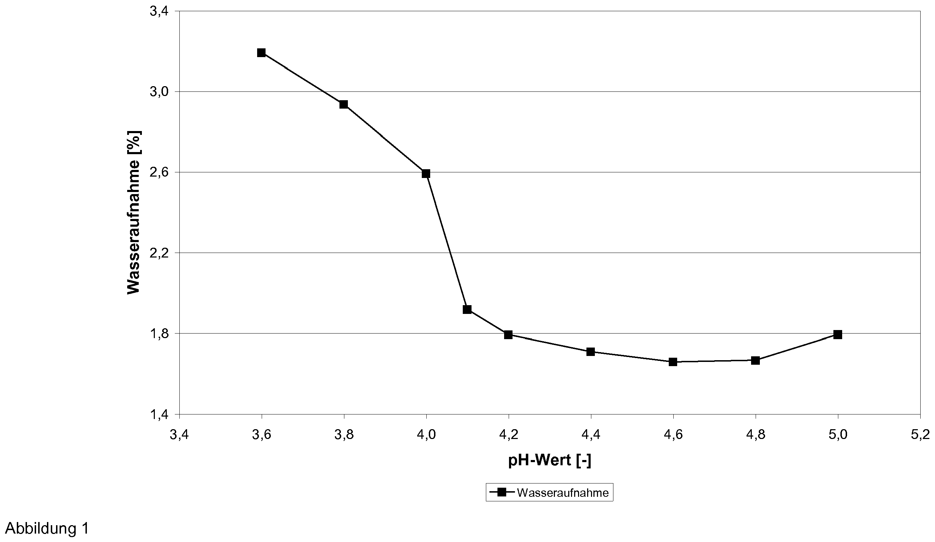

Zur Beurteilung der Wasseraufnahme des Materials wurden Bonbonkörper in Petrischalen (Ø 3,5 cm) gegossen und bei Raumtemperatur bis zum Erstarren abkühlen gelassen. Die Lagerung erfolgte für 5 Tage bei 25 °C und 80 % Luftfeuchte. Die Wasseraufnahme wurde anhand der Gewichtszunahme der Bonbonkörper beurteilt.
Überraschenderweise zeigte sich bei einem pH-Wert von 4,0 im Ergebnis eine sprunghafte relative Verringerung der Gewichtszunahme und damit der Hygroskopizität (siehe Abbildung 1).

### Beispiel 3: Karamellen erfindungsgemäß mit verbesserter Farbstabilität durch Einstellung des pH-Wertes

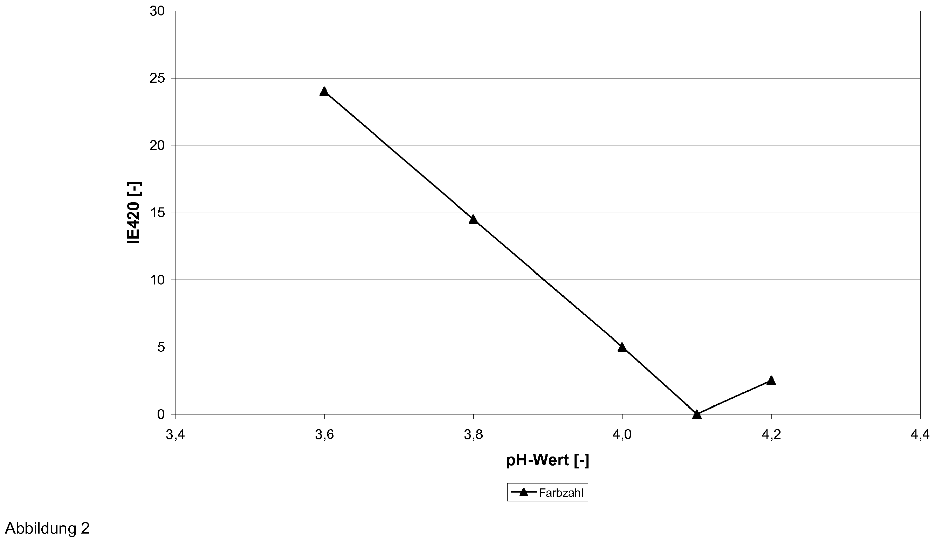

Wie beschrieben in Beispiel 2 wurden ausgehend von kommerziellem Isomalt durch Zugabe von 1 N NaOH bzw. 1 N HCl zuvor definierte pH-Werte eingestellt und Karamellen hergestellt. Zur Bestimmung der Farbzahl nach ICUMSA wurde eine 10 Gew.-% Lösung in vollentsalztem Wasser hergestellt durch Auflösen von 90 g Wasser und 10 g Schmelze.
Hierbei zeigte sich ein Optimum des Farbwerts und damit der Transparenz der Karamellen bei einem pH-Wert von 4,1 bis 4,2 (siehe Abbildung 2)

## Patentansprüche

1. Wässrige Lösung enthaltend
20 Gew.-% bis 75 Gew.-%, 6-O-α-D-Glucopyranosyl-D-Sorbitol,
25 Gew.-% bis 80 Gew.-% 1-O-α-D-Glucopyranosyl-D-Mannitol,
wobei sich die Gew.-% auf die Gesamtmenge der Zucker und Zuckeralkohole der gesamten Lösung beziehen, **dadurch gekennzeichnet, dass** die Lösung bei einer Temperatur von 25 °C einen pH-Wert von 4,0 bis 4,5 aufweist.

2. Wässrige Lösung gemäß Anspruch 1 zusätzlich enthaltend
0,02 Gew.-% bis 15 Gew.-% 1-O-α-D-Glucopyranosyl-D-Sorbitol, gegebenenfalls
0,02 Gew.-% bis 15 Gew.-% Sorbitol und gegebenenfalls
0,02 Gew.-% bis 15 Gew.-% Mannitol,
wobei sich die Gew.-% auf die Gesamtmenge der Zucker und Zuckeralkohole der gesamten Lösung beziehen.

3. Wässrige Lösung gemäß Anspruch 1 oder 2 aufweisend eine Gesamtmenge von Zuckern und Zuckeralkoholen von 40 Gew.-% bis 90 Gew.-% bezogen auf die gesamte wässrige Lösung.

4. Mischungszusammensetzung enthaltend
20 Gew.-% bis 75 Gew.-% 6-O-α-D-Glucopyranosyl-D-Sorbitol,
25 Gew.-% bis 80 Gew.-% 1-O-α-D-Glucopyranosyl-D-Mannitol und
0,02 Gew.-% bis 15 Gew.-% pH-Puffersubstanz,
wobei sich die Gew.-% auf die Gesamtmenge der Zucker und Zuckeralkohole der gesamten Mischungszusammensetzung beziehen, **dadurch gekennzeichnet,**
**dass** sie in Form einer 40 Gew.-% Trockensubstanz enthaltenden wässrigen Lösung, wobei sich die Gew.-% auf die gesamte wässrige Lösung beziehen, bei einer Temperatur von 25 °C einen pH-Wert von 4,0 bis 4,5 aufweist.

5. Mischungszusammensetzung gemäß Anspruch 4 zusätzlich enthaltend
0,02 Gew.-% bis 15 Gew.-% 1-O-α-D-Glucopyranosyl-D-Sorbitol, gegebenenfalls
0,02 Gew.-% bis 15 Gew.-% Sorbitol und gegebenenfalls
0,02 Gew.-% bis 15 Gew.-% Mannitol,
wobei sich die Gew.-% auf die Gesamtmenge der Zucker und Zuckeralkohole der gesamten Mischungszusammensetzung beziehen.

6. Mischungszusammensetzung gemäß Anspruch 4 oder 5,
**dadurch gekennzeichnet,**
**dass** sie in Form einer 40 Gew.-% Trockensubstanz enthaltenden wässrigen Lösung, wobei sich die Gew.-% auf die gesamte wässrige Lösung beziehen, bei einer Temperatur von 25 °C und bei einem pH-Wert von 4,2 eine Pufferkapazität von mindestens 0,01 mmol/l, insbesondere von mindestens 0,05 mmol/l, besonders bevorzugt von mindestens 0,1 mmol/l aufweist.

7. Mischungszusammensetzung gemäß mindestens einem der Ansprüche 4 bis 6,
**dadurch gekennzeichnet,**
**dass** die pH-Puffersubstanz ausgewählt ist aus mindestens einem der Gruppe umfassend Citrat-Puffer, Acetat-Puffer, Citrat-Phosphat-Puffer.

8. Mischungszusammensetzung gemäß mindestens einem der Ansprüche 4 bis 7,
**dadurch gekennzeichnet,**
**dass** die pH-Puffersubstanz einen Acetat-Puffer enthält, wobei dieser 0,12-Gew.% Eisessig und 0,08-Gew.% Natrium-Acetat Trihydrat enthält, wobei sich die Gew.-% auf die Trockensubstanz der gesamten Mischungszusammensetzung beziehen, oder einen Citrat-Puffer enthält, wobei dieser 0,30-Gew.% Zitronensäure und 0,31-Gew.% Natrium-Citrat enthält, wobei sich die Gew.-% auf die Trockensubstanz der gesamten Mischungszusammensetzung beziehen.

9. Mischungszusammensetzung gemäß mindestens einem der Ansprüche 4 bis 8,
**dadurch gekennzeichnet,**
**dass** sie bei 25 °C fest, bevorzugt kristallin, ist.

10. Mischungszusammensetzung gemäß Anspruch 8 oder 9,
**dadurch gekennzeichnet,**
**dass** sie einen Wassergehalt von kleiner 2 Gew.-% bezogen auf die gesamte Mischungszusammensetzung aufweist.

11. Mischungszusammensetzung gemäß mindestens einem der Ansprüche 4 bis 8 in Form einer wässrigen Lösung enthaltend 40 Gew.-% bis 90 Gew.-% Trockensubstanz bezogen auf die gesamte wässrige Lösung.

12. Mischungszusammensetzung gemäß Anspruch 11 bei einer Temperatur von 25 °C einen pH-Wert von 4,0 bis 5,0 aufweisend.

13. Verwendung einer wässrigen Lösung gemäß mindestens einem der Ansprüche 1 bis 3 oder einer Mischungszusammensetzung gemäß mindestens einem der Ansprüche 4 bis 12 zur Herstellung von Hartkaramellen.

14. Verfahren zur Herstellung einer Hartkaramelle umfassend die Verfahrensschritte
A) Bereitstellen einer Mischungszusammensetzung gemäß Anspruch 11 oder 12,
B) Erhitzen der wässrigen Mischungszusammensetzung und Reduzieren des Wassergehaltes auf kleiner 2 Gew.-% bezogen auf die gesamte Mischungszusammensetzung,
C) Abkühlen der Mischungszusammensetzung auf eine Temperatur von 100 °C bis 120 °C und gegebenenfalls Hinzufügen weiterer Zusätze wie beispielsweise Aromen, Farben und Säuren, und gegebenenfalls Homogenisieren und
D) Formen der Mischungszusammensetzung zu der gewünschten Hartkaramelle.

15. Verfahren zur Herstellung einer Hartkaramelle umfassend die Verfahrensschritte
A) Bereitstellen einer wässrigen Lösung gemäß mindestens einem der Ansprüche 1 bis 3 enthaltend 40 Gew.-% bis 90 Gew.-% Trockensubstanz bezogen auf die gesamte wässrige Lösung,
A1) Einstellen des pH-Wertes, dass die wässrige Lösung bei einer Temperatur von 25 °C einen pH-Wert von 4,0 bis 4,5 aufweist,
B) Erhitzen der wässrigen Lösung und Reduzieren des Wassergehaltes auf kleiner 2 Gew.-% bezogen auf die gesamte Mischungszusammensetzung,
C) Abkühlen auf eine Temperatur von 100 °C bis 120 °C und gegebenenfalls Hinzufügen weiterer Zusätze wie beispielsweise Aromen, Farben und Säuren, und gegebenenfalls Homogenisieren und
D) Formen zu der gewünschten Hartkaramelle.

16. Verfahren zur Herstellung einer Hartkaramelle umfassend die Verfahrensschritte
A) Bereitstellen einer Mischungszusammensetzung gemäß Anspruch 9 oder 10,
B) Aufschmelzen der Mischungszusammensetzung,
C) Abkühlen der Mischungszusammensetzung auf eine Temperatur von 100 °C bis 120 °C und gegebenenfalls Hinzufügen weiterer Zusätze wie beispielsweise Aromen, Farben und Säuren, und gegebenenfalls Homogenisieren
D) Formen der Mischungszusammensetzung zu der gewünschten Hartkaramelle.

17. Hartkaramelle enthaltend eine Mischungszusammensetzung gemäß mindestens einem der Ansprüche 4 bis 12 oder erhältlich nach einem der Verfahren gemäß Anspruch 14 bis 16.

## Claims

1. Aqueous solution containing
20% by weight to 75% by weight of 6-O-α-D-glucopyranosyl-D-sorbitol,
25% by weight to 80% by weight of 1-O-α-D-glucopyranosyl-D-mannitol,
wherein the percentages by weight relate to the total amount of the sugars and sugar alcohols of the total solution, **characterized in that** the solution, at a temperature of 25°C, has a pH of 4.0 to 4.5.

2. Aqueous solution according to Claim 1 additionally containing
0.02% by weight to 15% by weight of 1-O-α-D-glucopyranosyl-D-sorbitol, optionally 0.02% by weight to 15% by weight of sorbitol and optionally
0.02% by weight to 15% by weight of mannitol, wherein the percentages by weight relate to the total amount of the sugars and sugar alcohols of the total solution.

3. Aqueous solution according to Claim 1 or 2 having a total amount of sugars and sugar alcohols of 40% by weight to 90% by weight, based on the total aqueous solution.

4. Mixed composition containing
20% by weight to 75% by weight of 6-O-α-D-glucopyranosyl-D-sorbitol,
25% by weight to 80% by weight of 1-O-α-D-glucopyranosyl-D-mannitol and
0.02% by weight to 15% by weight of pH buffer substance,
wherein the percentages by weight relate to the total amount of the sugars and sugar alcohols of the total mixed composition, **characterized**
**in that** it has, in the form of a 40% by weight dry matter-containing aqueous solution, wherein the percentages by weight relate to the total aqueous solution, at a temperature of 25°C, a pH of 4.0 to 4.5.

5. Mixed composition according to Claim 4 additionally containing
0.02% by weight to 15% by weight of 1-O-α-D-glucopyranosyl-D-sorbitol, optionally 0.02% by weight to 15% by weight of sorbitol and optionally
0.02% by weight to 15% by weight of mannitol, wherein the percentages by weight relate to the total amount of the sugars and sugar alcohols of the total mixed composition.

6. Mixed composition according to Claim 4 or 5,
**characterized**
**in that** it has, in the form of a 40% by weight dry matter-containing aqueous solution, wherein the percentages by weight relate to the total aqueous solution, at a temperature of 25°C and a pH of 4.2, a buffering capacity of at least 0.01 mmol/l, in particular of at least 0.05 mmol/l, particularly preferably of at least 0.1 mmol/l.

7. Mixed composition according to at least one of Claims 4 to 6,
**characterized**
**in that** the pH buffer substance is selected from at least one of the group comprising citrate buffer, acetate buffer, citrate-phosphate buffer.

8. Mixed composition according to at least one of Claims 4 to 7,
**characterized**
**in that** the pH buffer substance contains an acetate buffer, wherein this contains 0.12% by weight of glacial acetic acid and 0.08% by weight of sodium acetate trihydrate, wherein the percentages by weight relate to the dry matter of the total mixed composition, or contains a citrate buffer, wherein this contains 0.30% by weight of citric acid and 0.31% by weight of sodium citrate, wherein the percentages by weight relate to the dry matter of the total mixed composition.

9. Mixed composition according to at least one of Claims 4 to 8,
**characterized**
**in that** it is solid, preferably crystalline, at 25°C.

10. Mixed composition according to Claim 8 or 9,
**characterized**
**in that** it has a water content of less than 2% by weight, based on the total mixed composition.

11. Mixed composition according to at least one of Claims 4 to 8 in the form of an aqueous solution containing 40% by weight to 90% by weight of dry matter, based on the total aqueous solution.

12. Mixed composition according to Claim 11 having a pH of 4.0 to 5.0 at a temperature of 25°C.

13. Use of an aqueous solution according to at least one of Claims 1 to 3, or a mixed composition according to at least one of Claims 4 to 12, for producing hard sweets.

14. Process for producing a hard sweet, comprising the process steps
A) providing a mixed composition according to Claim 11 or 12,
B) heating the aqueous mixed composition and reducing the water content to less than 2% by weight, based on the total mixed composition,
C) cooling the mixed composition to a temperature of 100°C to 120°C, and optionally adding further additives such as, for example, flavours, colours and acids, and optionally homogenizing, and
D) shaping the mixed composition to give the desired hard sweet.

15. Process for producing a hard sweet, comprising the process steps
A) providing an aqueous solution according to at least one of Claims 1 to 3 containing 40% by weight to 90% by weight of dry matter, based on the total aqueous solution,
A1) adjusting the pH in such a manner that the aqueous solution has a pH of 4.0 to 4.5 at a temperature of 25°C,
B) heating the aqueous solution and reducing the water content to less than 2% by weight, based on the total mixed composition,
C) cooling to a temperature of 100°C to 120°C, and optionally adding further additives such as, for example, flavours, colours and acids, and optionally homogenizing, and
D) shaping to give the desired hard sweet.

16. Process for producing a hard sweet, comprising the process steps
A) providing a mixed composition according to Claim 9 or 10,
B) fusing the mixed composition,
C) cooling the mixed composition to a temperature of 100°C to 120°C, and optionally adding further additives such as, for example, flavours, colours and acids, and optionally homogenizing
D) shaping the mixed composition to give the desired hard sweet.

17. Hard sweet containing a mixed composition according to at least one of Claims 4 to 12, or obtainable by one of the processes according to Claim 14 to 16.

## Revendications

1. Solution aqueuse, contenant :
20 % en poids à 75 % en poids de 6-O-α-D-glucopyranosyl-D-sorbitol,
25 % en poids à 80 % en poids de 1-O-α-D-glucopyranosyl-D-mannitol,
les % en poids se rapportant à la quantité totale de sucres et d'alcools de sucres de l'ensemble de la solution, **caractérisée en ce que** la solution présente à une température de 25 °C un pH de 4,0 à 4,5.

2. Solution aqueuse selon la revendication 1, contenant en outre :
0,02 % en poids à 15 % en poids de 1-O-α-D-glucopyranosyl-D-sorbitol, éventuellement
0,02 % en poids à 15 % en poids de sorbitol, et éventuellement
0,02 % en poids à 15 % en poids de mannitol,
les % en poids se rapportant à la quantité totale de sucres et d'alcools de sucres de l'ensemble de la solution.

3. Solution aqueuse selon la revendication 1 ou 2, comprenant une quantité totale de sucres et d'alcools de sucres de 40 % en poids à 90 % en poids, par rapport à l'ensemble de la solution aqueuse.

4. Composition de mélange contenant :
20 % en poids à 75 % en poids de 6-O-α-D-glucopyranosyl-D-sorbitol,
25 % en poids à 80 % en poids de 1-O-α-D-glucopyranosyl-D-mannitol, et
0,02 % en poids à 15 % en poids d'une substance de tamponnage du pH,
les % en poids se rapportant à la quantité totale de sucres et d'alcools de sucres de l'ensemble de la composition de mélange, **caractérisée en ce qu'**elle présente sous la forme d'une solution aqueuse contenant 40 % en poids de substance sèche, les % en poids se rapportant à l'ensemble de la solution aqueuse, à une température de 25 °C un pH de 4,0 à 4,5.

5. Composition de mélange selon la revendication 4, contenant en outre :
0,02 % en poids à 15 % en poids de 1-O-α-D-glucopyranosyl-D-sorbitol, éventuellement
0,02 % en poids à 15 % en poids de sorbitol, et éventuellement
0,02 % en poids à 15 % en poids de mannitol,
les % en poids se rapportant à la quantité totale de sucres et d'alcools de sucres de l'ensemble de la composition de mélange.

6. Composition de mélange selon la revendication 4 ou 5, **caractérisée en ce qu'**elle présente sous la forme d'une solution aqueuse contenant 40 % en poids de substance sèche, les % en poids se rapportant à l'ensemble de la solution aqueuse, à une température de 25 °C et à un pH de 4,2 une capacité de tamponnage d'au moins 0,01 mmol/l, notamment d'au moins 0,05 mmol/l, de manière particulièrement préférée d'au moins 0,1 mmol/l.

7. Composition de mélange selon au moins l'une quelconque des revendications 4 à 6, **caractérisée en ce que** la substance de tamponnage du pH est choisie parmi au moins une du groupe comprenant un tampon citrate, un tampon acétate, un tampon citrate-phosphate.

8. Composition de mélange selon au moins l'une quelconque des revendications 4 à 7, **caractérisée en ce que** la substance de tamponnage du pH contient un tampon acétate, celui-ci contenant 0,12 % en poids d'acide acétique glacial et 0,08 % en poids d'acétate de sodium trihydraté, les % en poids se rapportant à la substance sèche de l'ensemble de la composition de mélange, ou contient un tampon citrate, celui-ci contenant 0,30 % en poids d'acide citrique et 0,31 % en poids de citrate de sodium, les % en poids se rapportant à la substance sèche de l'ensemble de la composition de mélange.

9. Composition de mélange selon au moins l'une quelconque des revendications 4 à 8, **caractérisée en ce qu'**elle est solide, de préférence cristalline, à 25 °C.

10. Composition de mélange selon la revendication 8 ou 9, **caractérisée en ce qu'**elle présente une teneur en eau de moins de 2 % en poids, par rapport à l'ensemble de la composition de mélange.

11. Composition de mélange selon au moins l'une quelconque des revendications 4 à 8, sous la forme d'une solution aqueuse contenant 40 % en poids à 90 % en poids de substance sèche, par rapport à l'ensemble de la solution aqueuse.

12. Composition de mélange selon la revendication 11, présentant à une température de 25 °C un pH de 4,0 à 5,0.

13. Utilisation d'une solution aqueuse selon au moins l'une quelconque des revendications 1 à 3 ou d'une composition de mélange selon au moins l'une quelconque des revendications 4 à 12 pour la fabrication de caramels durs.

14. Procédé de fabrication d'un caramel dur, comprenant les étapes de procédé suivantes :
A) la mise à disposition d'une composition de mélange selon la revendication 11 ou 12,
B) le chauffage de la composition de mélange aqueuse et la réduction de la teneur en eau à moins de 2 % en poids, par rapport à l'ensemble de la composition de mélange,
C) le refroidissement de la composition de mélange à une température de 100 °C à 120 °C, et éventuellement l'ajout d'additifs supplémentaires, tels que par exemple des arômes, des colorants et des acides, et éventuellement l'homogénéisation, et
D) le façonnage de la composition de mélange en le caramel dur souhaité.

15. Procédé de fabrication d'un caramel dur, comprenant les étapes de procédé suivantes :
A) la mise à disposition d'une solution aqueuse selon au moins l'une quelconque des revendications 1 à 3, contenant 40 % en poids à 90 % en poids de substance sèche, par rapport à l'ensemble de la solution aqueuse, A1) l'ajustement du pH, de telle sorte que la solution aqueuse présente à une température de 25 °C un pH de 4,0 à 4,5,
B) le chauffage de la solution aqueuse et la réduction de la teneur en eau à moins de 2 % en poids, par rapport à l'ensemble de la composition de mélange,
C) le refroidissement à une température de 100 °C à 120 °C, et éventuellement l'ajout d'additifs supplémentaires, tels que par exemple des arômes, des colorants et des acides, et éventuellement l'homogénéisation, et
D) le façonnage en le caramel dur souhaité.

16. Procédé de fabrication d'un caramel dur, comprenant les étapes de procédé suivantes :
A) la mise à disposition d'une composition de mélange selon la revendication 9 ou 10,
B) la fusion de la composition de mélange,
C) le refroidissement de la composition de mélange à une température de 100 °C à 120 °C, et éventuellement l'ajout d'additifs supplémentaires, tels que par exemple des arômes, des colorants et des acides, et éventuellement l'homogénéisation,
D) le façonnage de la composition de mélange en le caramel dur souhaité.

17. Caramel dur contenant une composition de mélange selon au moins l'une quelconque des revendications 4 à 12 ou pouvant être obtenu par l'un quelconque des procédés selon les revendications 14 à 16.
